# FASCICULE DE BREVET EUROPEEN

(11) **EP 1 714 097 B1**
(45) Date de publication et mention de la délivrance du brevet: **23.09.2015**
(21) Numéro de dépôt: 05726340.2
(22) Date de dépôt: 27.01.2005
(51) Int. Cl.: F27D 1/16, C03B 5/44, C03B 5/235, F27D 19/00

(54) **FOUR A ENVELOPPE METALLIQUE**
OFEN MIT METALLGEHÄUSE
METAL CASING FURNACE

(30) Priorité: 02.02.2004 FR 0400955
(43) Date de publication de la demande: 25.10.2006
(73) Titulaire: SAINT-GOBAIN GLASS FRANCE, 92400 Courbevoie (FR)
(72) Inventeur: PALMIERI, Biagio, Saint-Gobain Recherche, F-93300 AUBERVILLIERS (FR); JACQUES, Rémi, Saint-Gobain Recherche, F-93300 AUBERVILLIERS (FR); JEANVOINE, Pierre, Saint-Gobain Glass France, F-92400 COURBEVOIE (FR)
(74) Mandataire: Colombier, Christian
(86) Numéro de dépôt international: PCT/FR2005/050049
(87) Numéro de publication internationale: WO 2005/075912

(56) Documents cités:
- BE-A- 438 005
- DE-A- 19 802 207
- US-A- 3 170 781
- US-A- 3 837 630
- US-A- 3 963 815
- US-A- 5 779 947
- PATENT ABSTRACTS OF JAPAN vol. 0071, no. 02 (M-211), 30 avril 1983 (1983-04-30) & JP 58 023533 A (TOKYO SHIBAURA DENKI KK), 12 février 1983 (1983-02-12) cité dans la demande

## Description

L'invention concerne un four à enveloppe métallique, pouvant être du type à brûleurs immergés et pouvant être muni de moyens de refroidissements comme des ailettes de refroidissement. Ce four peut notamment servir à la fusion de matières vitrifiables en vue de réaliser un verre.

Les fours sont habituellement réalisés par l'assemblage de briques (ou plaques) réfractaires assemblées de manière jointive (entre lesquelles un ciment réfractaire peut être placé pour donner une cohésion et une étanchéité à l'ensemble). Cependant, ce type d'assemblage traditionnel est assez fastidieux et par ailleurs soufre d'une certaine fragilité notamment au niveau des joint (notamment du ciment réfractaire) qui ne manquent généralement pas, à plus ou moins brève échéance, de s'éroder pour contaminer le contenu du four et/ou faire perdre de l'étanchéité au four. Par ailleurs, l'homogénéité de la température à l'intérieur d'un four est un problème que l'on cherche en permanence à améliorer.

Le US5779947 enseigne un contenant en un réfractaire moulable coulé pour contenir du métal fondu.

Le JP58023533 enseigne un four dont le contenant comprend une paroi interne en graphite pour venir au contact de métal fondu. La paroi externe du contenant est chauffée par des résistances extérieures.

On a maintenant trouvé un nouveau four et un procédé de fabrication dudit four, pouvant notamment faire appel à de nouveaux matériaux, et résolvant les problèmes sus-mentionnés.

On défini comme axe vertical du four selon l'invention la verticale passant par son barycentre. Il ne s'agit pas nécessairement d'un axe de symétrie. Cet axe traverse le volume interne (utile) du four.

Le four selon l'invention comprend autour de son axe:
- une enveloppe métallique et
- une enveloppe réfractaire placée à l'intérieur de l'enveloppe métallique et destinée à venir en contact avec le contenu à chauffer par le four.

Ces deux enveloppes font toutes deux le tour de l'axe vertical du four en au moins un niveau horizontal. Le terme enveloppe ne signifie donc pas qu'elle entoure nécessairement la totalité du four, c'est-à-dire le dessus, les côtés et le dessous du four, mais plutôt qu'elle entoure l'axe du four en au moins un niveau horizontal.

La présence de l'enveloppe métallique améliore l'homogénéité de la température à l'intérieur du four car, du fait de la haute conductivité thermique de son métal, elle contribue à accélérer la répartition de la chaleur entre les différents endroits, notamment les différents niveaux horizontaux du four. De plus, elle facilite le réglage et le contrôle de la température du four et de l'enveloppe réfractaire car elle peut être refroidie. En effet, l'enveloppe réfractaire peut être en un matériau qu'il convient de ne pas trop chauffer sous peine de la voir fluer. C'est notamment le cas du béton réfractaire évoqué dans la présente demande. Il est donc particulièrement important de ne pas dépasser les températures limites du matériau, ce qui n'est pas évident à réaliser si l'on souhaite travailler à proximité desdites températures limites. Ainsi, l'enveloppe métallique peut contribuer au refroidissement du four.

Le moyen de refroidissement de l'enveloppe métallique peut être l'un des suivants :
- convection naturelle de l'air ambiant,
- convection forcée par un ventilateur,
- aspersion d'eau,
- canalisation venant en contact avec l'enveloppe métallique (faisant par exemple le tour de cette enveloppe plusieurs fois) et parcourue par un fluide de refroidissement comme l'eau froide,
- ailettes de refroidissement.

Le refroidissement par une canalisation venant en contact avec l'enveloppe métallique et parcourue par un fluide de refroidissement comme l'eau froide, présente l'inconvénient de ce que l'eau tend à se réchauffer pendant son parcours dans la canalisation, ce qui peut nuire à l'homogénéité du refroidissement.

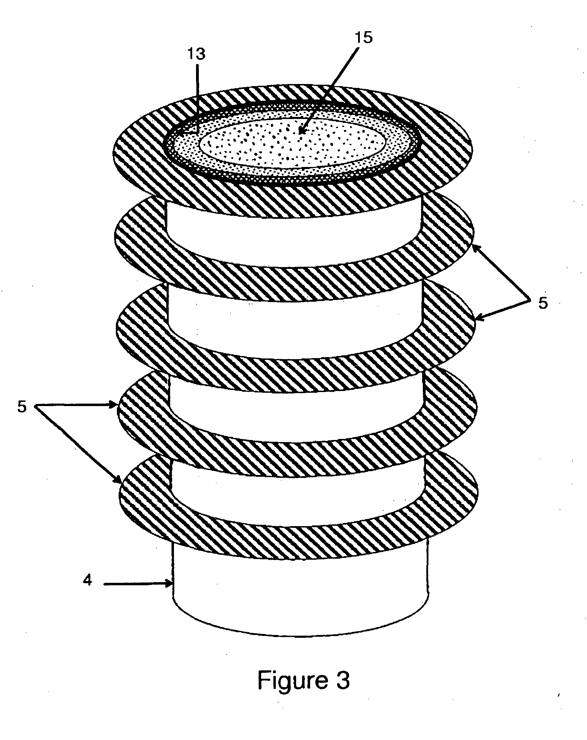

La présence d'ailettes de refroidissement est préférée car ces ailettes jouent un double rôle : 1) refroidir l'enveloppe métallique et donc tout ce qu'elle contient, et 2) renforcer l'enveloppe. En effet, malgré le rôle homogénéisateur de l'enveloppe pour la température, il est difficile d'atteindre l'égalité parfaite de la température en tous points de l'enveloppe métallique. De ce fait, on observe une tendance de cette enveloppe à se dilater moins fortement aux endroits plus froids, comme les coins ou parties plus extérieures du four. Ces différences de dilatation selon les endroits de l'enveloppe métallique, conduisent à des déformations non négligeables (par exemple un effet « tonneau » dans le cas d'une enveloppe métallique cylindrique) que l'enveloppe réfractaire ne suit pas totalement du fait de son plus faible coefficient de dilatation. Cette disparité de comportement entre les deux enveloppes conduit à des mouvements et frottements entre elles et à l'usure plus rapide de l'enveloppe réfractaire. Une autre conséquence néfaste de ce comportement est aussi l'inhomogénéité de température ainsi créée, menant à la formation de zones plus froides ou au contraire plus chaudes, ce qui perturbe le fonctionnement du four (le cas échéant un four de fusion du verre) et peut être préjudiciable à la qualité du produit fabriqué par le four. En effet, si l'enveloppe métallique se dilate plus fortement par exemple au milieu de sa hauteur (effet « tonneau » dans le cas d'un cylindre comme celui de la figure 3), l'évacuation de la chaleur provenant de l'intérieur du four pourra être encore plus difficile à ce niveau, provoquant une montée supplémentaire de température, laquelle accroîtrait encore la dilatation de l'enveloppe au même endroit. Ainsi, l'inhomogénéité de température, lorsqu'elle est créée pourrait avoir tendance à s'amplifier et pourrait conduire à la détérioration du four, notamment par surchauffe excessive de certaines zones résultant d'un refroidissement perturbé.

Les ailettes renforcent l'enveloppe métallique et la stabilisent sur un plan dimensionnel. En effet, même si la partie de l'ailette directement en contact avec l'enveloppe à tendance à se dilater comme l'enveloppe, plus on va vers l'extrémité de l'ailette, plus celle-ci est froide et lutte contre la dilatation de l'ensemble. Cet effet est d'autant plus fort que l'ailette fait le tour du four autour de l'axe horizontal. Des ailettes au moins partiellement horizontales sont de ce fait préférées. Ainsi, de préférence, au moins une ailette est au moins partiellement horizontale fait le tour du four autour de son axe vertical. Les ailettes sont généralement métalliques et forment des surfaces d'échange avec l'air ambiant en s'étendant vers l'extérieur du four. Elles peuvent notamment être parallèles à l'axe du four, ou perpendiculaires à l'axe du four.

On peut combiner le refroidissement par ailettes et au moins l'un des autres moyens de refroidissement, par exemple en envoyant un courant d'air sur les ailettes ou même en aspergeant les ailettes d'eau. La simple convection naturelle de l'air ambiant autour des ailettes peut être suffisante.

Afin de limiter encore les effets des différences de dilatation entre l'enveloppe métallique et l'enveloppe réfractaire, on place avantageusement entre ces deux enveloppes une feuille (ou matelas) compressible réfractaire, en un matériau pouvant absorber ces différences de dilatation comme une feuille de matériau fibreux réfractaire par exemple du type feuille de Kerlane. Une telle feuille peut par exemple avoir 1 à 100 mm d'épaisseur. En l'absence de feuille compressible réfractaire, l'enveloppe réfractaire est juxtaposée à l'enveloppe métallique. Dans le cas de la présence d'une feuille compressible réfractaire, la feuille, placées entre ces deux enveloppes est juxtaposée à ces deux enveloppes.

L'enveloppe réfractaire peut être de tout type, y compris du type traditionnel (briques jointives). Dans ce cas, on préfère que l'épaisseur de l'enveloppe réfractaire soit suffisante pour qu'en cas de perforation indésirable (pouvant survenir surtout aux joints) le contenu du four puisse se solidifier au cours de sa progression dans la perforation. Bien entendu, cela n'est pas forcément possible pour tous les types de milieux, mais cela est en particulier envisageable pour le verre fondu. Si l'enveloppe réfractaire est suffisamment épaisse, son périmètre plus extérieur peut être suffisamment froid pour que le verre fondu se fige et colmate de ce fait la fuite.

Cependant, la demanderesse a découvert que l'enveloppe réfractaire pouvait avantageusement être réalisée par moulage d'un béton réfractaire. Un tel procédé présente l'avantage considérable de réduire voir éliminer totalement la présence de joints entre différentes briques réfractaires. Ainsi, on peut réaliser une enveloppe réfractaire monolithique, avec un minimum de joints, voire dépourvue de joints, pour venir en contact avec le contenu du four. De plus, ce type de fabrication est particulièrement simple de mise en oeuvre. Ainsi, l'enveloppe peut avoir notamment un caractère monolithique en au moins un niveau horizontal. Ceci signifie qu'elle est dépourvue de joints en au moins un niveau horizontal : elle fait le tour de l'axe vertical du four en restant très homogène et sans joint. Cette propriété concerne tout particulièrement toute paroi latérale du four (sur les côtés) qui fait partie de l'enveloppe réfractaire et peut donc avoir un caractère monolithique.

L'enveloppe métallique, le cas échéant munie en son intérieur de la feuille intermédiaire fibreuse, peut servir de forme externe de moulage pour l'opération de coulée du béton. Pour cette coulée, on prévoie également une forme interne de moulage de façon à ménager le volume utile du futur four final, le béton étant coulé entre ces deux formes de moulage. Ainsi, l'enveloppe métallique peut jouer un rôle multiple:
- refroidissement du four,
- homogénéisation de la température du four,
- le cas échéant support des ailettes,
- le cas échéant moule pour la coulée du béton.

Le béton est du type réfractaire. Il peut s'agir de béton fabriqués à partir de grains d'AZS (Alumine Zircone Silice) ou d'alumine électrofondue et/ou d'oxyde de chrome comme par exemple ceux de marque Ergal, Ersol, Erchrome commercialisés par la société SEFPRO. Le béton se prépare de façon classique par mélange de poudre et d'eau. On doit prévoir suffisamment d'eau pour que le béton se répartisse correctement dans le moule.

Avec ce type de béton, on a observé une tenue satisfaisante jusqu'à 1500°C. Le four est plutôt destiné à fonctionner jusqu'à 1400°C.

Le métal de l'enveloppe métallique peut être en acier standard, réfractaire oi inoxydable (exemples d'aciers : 304, 316, 316L), un inconel ou tout autre métal résistant à l'air ambiant aux températures à laquelle l'enveloppe est portée.

Avant de couler le béton, il convient de placer aux endroits idoines des pièces d'obstructions ou des bouchons ménageant les orifices nécessaire à l'installation de brûleur(s), de cheminée(s), de moyen d'introduction de la matière à traiter dans le four. Le béton se répartira donc autour de ces bouchons et lorsqu'il sera durci, il suffira d'enlever ces bouchons pour découvrir les orifices nécessaires. Les orifices nécessaires auront bien entendu également été prévus dans l'enveloppe métallique. On peut ainsi ménager les orifices nécessaires à l'installation des divers accessoires du four comme pour l'introduction des matières à chauffer (pouvant être assurée par une vis sans fin), au moins un brûleur, aérien ou immergé, une cheminée, une sortie des matières fondues pouvant être une gorge ou un déversoir ou de tout type adapté. Ces accessoires peuvent notamment être scellés par un béton du même type que celui utilisé pour réaliser les parois en béton moulé du four.

Les enveloppes métalliques et réfractaires peuvent être de section carrée ou rectangulaire ou autre, perpendiculairement à l'axe vertical du four. On préfère une section circulaire car cela est préférable pour l'homogénéité de la température pour le four en fonctionnement, et parce que la réalisation d'enveloppes cylindriques est particulièrement aisée. On pourrait également réaliser des enveloppes sphériques (particulièrement avantageux sur le plan de l'homogénéité de la température dans le four). Pour ce faire, la forme intérieure de moulage serait également sphérique et pourrait être en un matériau combustible comme en polystyrène, ou en bois en en plastique, ou en élastomère (ce pourrait être un ballon gonflé) et il suffirait de la brûler pour l'enlever (démoulage). La forme intérieure de moulage pourrait avoir un fond hémi-sphérique, c'est-à-dire combinant un corp principal cylindrique et un fond hémisphérique. Notamment, un brûleur immergé pourrait être placé au milieu de ce fond hémisphérique.

La forme intérieur de moulage étant destinée à être enlevée après durcissement du béton, elle peut être en tout matériau résistant à la coulée du béton : métal comme l'acier, tôle métallique, bois, plastique, etc.

Le mode de chauffage du four peut-être de tout type : électrique, à brûleurs aériens, à brûleurs immergés, ou une combinaison d'au moins deux de ces modes de chauffage. L'invention est particulièrement adaptée aux four de faible dimensions pouvant être de faible tirée, et/ou aux fours à haut rendement et autorisant une tirée substantielle en dépit d'une faible dimension (faible surface au sol). En effet, le fait que l'on joue sur un équilibre entre chaleur apportée dans le four et chaleur évacuée par l'enveloppe métallique convient mieux aux four de faibles dimensions. De ce fait, le four est avantageusement équipé d'au moins un brûleur immergé. Un tel four peut notamment avoir une surface au sol allant de 0,5 à 50 m², et plus particulièrement 0,8 à 6 m². L'invention convient de plus aux fours dans lesquels les parois sont relativement froides et relativement peu épaisses, en particulier aux fours chauffés par au moins un brûleur immergé qui transmet l'énergie directement dans la composition à chauffer. La technologie des brûleurs immergés est particulièrement adaptée au four selon l'invention, notamment dont les enveloppes sont cylindriques car les zones mortes sont ainsi limitées. De plus ce procédé de fusion du verre dans laquelle l'énergie est apportée au coeur du verre, permet des parois peu épaisses et relativement froides, aisément construite selon le principe décrit dans la présente demande. Notamment, l'invention est bien adaptée à la réalisation de fondoirs à cuves multiples, pour lesquels la simplicité de construction est particulièrement recherchée.

Le four selon l'invention, plus particulièrement lorsqu'il est équipé d'au moins un brûleur immergé, est bien adapté à la fabrication de frittes de coloration ou de frittes de carrelage. L'invention est particulièrement utile pour la réalisation de four de fabrication de tout type de verre, ce qui inclut les frittes de coloration. En particulier, on peut réaliser au moins une ou toutes les cuves du four enseigné par la demande de brevet français 0209728 du 31 juillet 2002 dont le contenu est inclut à la présente par référence. De telles frittes sont à base de silice et contiennent au moins un colorant. Ces frittes ont des compositions qui sont très variables en fonction de leur utilisation. Ainsi les frittes pour coloration de verre comportent-elles des oxydes colorants du type Cr₂O₃, CoO, CuO et autres. Les frittes de carrelage comportent des oxydes comme le ZnO. D'autres frittes pour applications particulières peuvent comporter d'autres oxydes comme par exemple l'oxyde d'argent en petites quantités. La technologie de combustion immergée (brûleurs immergés) peut permettre l'utilisation comme matière première de certains de ces oxydes sous une forme réduite et par exemple métallique. Notamment, le métal peut être au moins l'un des métaux suivants : Zn, Cu, Cr, Ag. L'oxydation du métal est assuré par le réglage oxydant des brûleurs de la cuve recevant ces matières premières réduites. Il suffit d'établir un excès d'oxygène qui corresponde à la quantité nécessaire pour oxyder ces matières. Ceci fonctionne bien en général si la quantité de ces matières premières réduites ne dépasse pas une certaine quantité (moins de 15% voire moins de 10% du total), car alors leur oxydation est rapide et n'affecte pas le redox du verre final. Cette oxydation rapide est favorisée par la température homogène et bien contrôlée du four tel que décrit (cuve cylindrique comportant une enveloppe en béton réfractaire, en particulier maintenu par une enveloppe métallique munie d'ailettes et refroidie par l'air). Un autre avantage de cette utilisation de matières au degré d'oxydation réduit est la pleine utilisation de l'énergie d'oxydation de ces matières : puisque l'oxydation se produit dans la cuve même de fusion, l'énergie d'oxydation vient en déduction de l'énergie principale: il y a donc une économie d'énergie. Ainsi l'invention concerne également un procédé de fabrication d'un verre ou d'une fritte de coloration ou d'une fritte de carrelage, un métal étant ajouté aux matières vitrifiables, ledit métal étant oxydé au cours du processus de fusion.

On peut avoir intérêt à cette utilisation dans le cas où le métal est économiquement moins cher que l'oxyde.

L'invention concerne également un procédé de fabrication d'un four, selon lequel la paroi interne du four est au moins partiellement moulée entre deux formes de moulage à partir d'un béton réfractaire. Notamment, une enveloppe métallique faisant partie intégrante du four sert de forme de moulage externe pour le béton. En particulier, le procédé de fabrication peut comprendre les étapes suivantes :
a) on coule dans une forme externe de moulage juste le béton nécessaire pour former la sole du four, puis
b) on laisse durcir le béton de la sole, puis
c) on place sur la sole une forme interne de moulage, puis
d) on coule le béton entre les deux formes de moulage, puis
e) on laisse durcir le béton entre les deux formes de moulage, puis
f) on enlève la forme interne de moulage, puis
g) on traite thermiquement le four afin de le rendre stable pour son fonctionnement.

La figure 1 représente un four verrier du type à brûleurs immergés selon l'invention en cours de construction, vue en coupe de côté.

La figure 2 représente la forme interne de moulage de l'enveloppe en béton.

La figure 3 représente les éléments principaux du four selon l'invention en perspective.

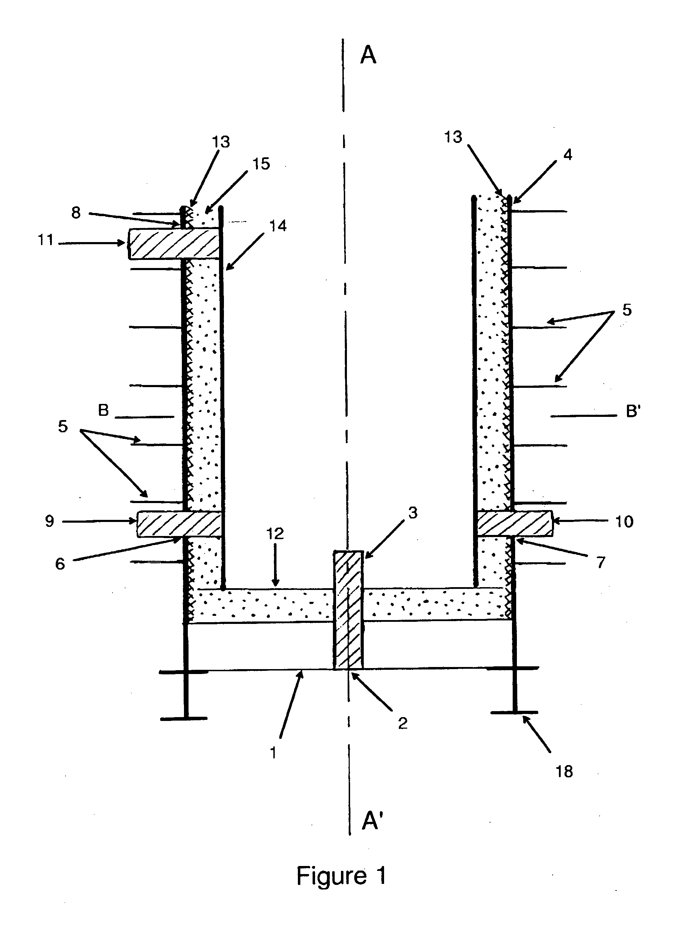

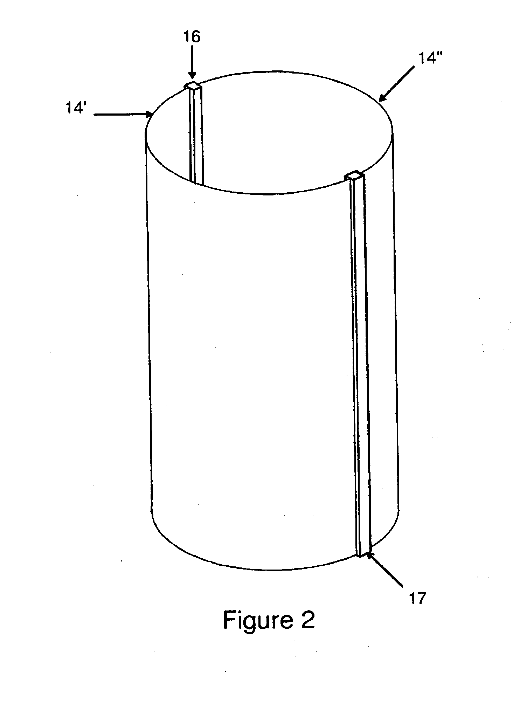

On voit sur la figure 1 le four en construction juste après la coulée du béton réfractaire destiné à constituer l'enveloppe réfractaire. Cette construction a été réalisée selon les étapes suivantes :
1. on place sur le sol un châssis métallique 18 sur lequel on soude l'enveloppe métallique 4. On place au fond et à l'intérieur de l'enveloppe métallique une dalle 1 d'un matériau réfractaire classique. Cette dalle fera partie du four final. On a ménagé en son centre un orifice 2 afin de pouvoir placer ultérieurement un brûleur immergé. On a placé dans l'orifice un bouchon 3 pour empêcher le béton de couler dans l'orifice. L'enveloppe métallique 4 est prête dans sa configuration finale et est munie d'ailettes de refroidissement 5. Ces ailettes sont annulaires, concentriques, soudées sur un cylindre dont l'axe correspond à l'axe AA' du four et qui forme le corps de l'enveloppe métallique. Cette enveloppe composée d'un cylindre et des ailettes est en acier 304. On a prévu les orifices suivants dans le cylindre de l'enveloppe métallique : a) l'orifice 6 pour l'entrée des matières premières (calcin ou autres) pouvant être sous le niveau des matières fondues (une vis sans fin pourra par exemple être prévue pour pousser les matières vitrifiables dans le four), b) l'orifice 7 pour la sortie du verre fondu, c) l'orifice 8 pour une cheminée d'évacuation des fumées. Cette cheminée est prévue latérale car elle sera ainsi moins remplie de verre solidifié suite aux importantes projections dues au brûleur immergé. Ces trois orifices sont représentées bouchés par des bouchons respectivement 9, 10, 11, pour éviter que le béton ultérieurement coulé ne s'y introduise ; on a également placé sur toute la surface interne une feuille 13 de 2 cm d'épaisseur de Kerlane (laquelle servira à encaisser les différences de dilatation entre l'enveloppe métallique et l'enveloppe réfractaire) ;
2. on coule une première quantité de béton, seulement pour former la sole du fond 12 selon un anneau entourant le bouchon 3 (lequel est suffisamment long pour traverser la sole) ;
3. quand la sole est suffisamment solidifiée, sans être totalement sèche on place dessus une pièce 14 cylindrique en métal (elle pourrait être en un autre matériau : plastique, bois, polystyrène, etc) qui servira de forme de moulage interne au béton coulé. Cette pièce est en fait constituée de deux demi-cylindres comme le représente la figure 2, afin de faciliter le démoulage. Cette pièce est concentrique au cylindre de l'enveloppe 13.
4. on coule le béton 15 entre les deux formes 13 et 14 pour constituer la paroi interne du futur four verrier, alors que la sole n'est pas totalement sèche, ce qui favorise la liaison entre la sole et le cylindre en béton 15 destiné à former la paroi latérale du futur four ;
5. on laisse sécher le béton jusqu'à solidification ;
6. on retire le moule interne 14, ce qui est facilité grâce aux cales (que l'on retire d'abord) entre les deux demi-formes (voir figure 2).

La construction du four est ensuite achevée de façon classique : on place les éléments nécessaires au fonctionnement comme le brûleur immergé, la cheminée, le canal d'évacuation du verre, etc, le béton ayant été coulé pour former la sole et la paroi latérale, pouvant également servir à la réalisation des scellements des différents éléments périphériques du four. La voûte du four peut être constituée d'une simple dalle en matériau réfractaire, laquelle peut d'ailleurs être réalisée dans le même béton réfractaire que la paroi interne 15 du four. Avant mise en service du four, il convient de réaliser un traitement thermique à vide pour stabiliser la structure et en particulier le béton coulé. Pour ce traitement thermique, la montée en température est progressive (par exemple entre 5 et 15°C/h). Il est préférable de monter la température au moins jusqu'à celle prévue pour le fonctionnement du four. L'enveloppe métallique et l'enveloppe réfractaire entourent toutes deux l'axe AA' en au moins un niveau horizontal BB' qui pourrait correspondre au niveau du verre à l'intérieur du four.

La figure 2 représente la forme interne de moulage (14 sur la figure 1) constituée de deux demi-cylindres 14' et 14" séparées par deux tasseaux en bois 16 et 17 (ils pourraient être par exemple en polystyrène, ce qui permettrait de les brûler pour les enlever au démoulage). Quand on veut démouler le béton, on enlève d'abord les deux tasseaux (ou cales) 16 et 17, et il est alors très facile d'enlever les deux demi-cylindres 14' et 14".

La figure 3 représente les principaux composants du four selon l'invention : l'enveloppe métallique 4 sur laquelle sont fixées les ailettes de refroidissement 5, la feuille fibreuse intermédiaire et le béton sec 15 formant la paroi interne du four. On a pas représenté la dalle posé sur le four pour le fermer, ni les accessoires périphériques du type cheminée, moyen d'introduction des matières vitrifiables, gorge de sortie du verre fondu, brûleur.

## Revendications

1. Four comprenant une enveloppe métallique (4) et une enveloppe réfractaire placée à l'intérieur de l'enveloppe métallique (4) et destinée à venir en contact avec le contenu à chauffer par le four, **caractérisé en ce que** l'enveloppe métallique (4) contribue au refroidissement du four et est munie d'ailettes de refroidissement (5).

2. Four selon la revendication précédente **caractérisé en ce que** l'enveloppe réfractaire est en béton réfractaire moulé.

3. Four selon la revendication précédente **caractérisé en ce que** l'enveloppe a un caractère monolithique en au moins un niveau horizontal.

4. Four selon la revendication 2 ou 3, **caractérisé en ce que** les parois latérales du four font partie de l'enveloppe réfractaire et ont un caractère monolithique.

5. Four selon l'une des revendications précédentes, **caractérisé en ce qu'**au moins une ailette est au moins partiellement horizontale et fait le tour du four autour de son axe vertical.

6. Four selon l'une des revendications précédentes **caractérisé en ce que** les ailettes luttent contre la dilatation de l'enveloppe métallique (4).

7. Four selon l'une des revendications précédentes **caractérisé en ce qu'**une feuille compressible réfractaire est placée entre l'enveloppe métallique (4) et l'enveloppe réfractaire.

8. Four selon l'une des revendications précédentes **caractérisé en ce qu'**il comprend au moins un brûleur immergé.

9. Four selon l'une des revendications précédentes, **caractérisé en ce que** sa surface au sol est inférieure ou égale à 6 m².

10. Procédé de fabrication d'un four de l'une des revendications précédentes, **caractérisé en ce que** l'enveloppe réfractaire est au moins partiellement moulée à partir d'un béton réfractaire entre deux formes de moulage dont l'une est l'enveloppe métallique (4) munie d'ailettes de refroidissement (5) et servant de forme de moulage externe pour ledit béton.

11. Procédé selon la revendication précédente, **caractérisé en ce qu'**il comprend les étapes suivantes :
a) on coule dans une forme externe de moulage juste le béton nécessaire pour former la sole du four, puis
b) on laisse durcir le béton de la sole, puis
c) on place sur la sole une forme interne de moulage, puis
d) on coule le béton entre les deux formes de moulage, puis
e) on laisse durcir le béton entre les deux formes de moulage, puis
f) on enlève la forme interne de moulage, puis
g) on traite thermiquement le four afin de le rendre stable pour son fonctionnement.

12. Utilisation du four de l'une des revendications de four précédentes pour contenir à l'état fondu un verre ou une fritte de coloration ou une fritte de carrelage, l'enveloppe métallique (4) munie d'ailettes de refroidissement (5) contribuant au refroidissement du four.

13. Procédé de fabrication d'un verre ou d'une fritte de coloration ou d'une fritte de carrelage par un four de l'une des revendications de four précédentes, comprenant l'introduction et la fusion dans ledit four de matières vitrifiables puis la sortie de matières fondues dudit four, l'enveloppe métallique (4) munie d'ailettes de refroidissement (5) contribuant au refroidissement du four.

14. Procédé selon la revendication précédente, **caractérisé en ce qu'**un métal est ajouté aux matières vitrifiables, ledit métal étant oxydé au cours du processus de fusion.

## Patentansprüche

1. Ofen, umfassend eine metallische Ummantelung (4) und eine feuerfeste Ummantelung, die im Inneren der metallischen Ummantelung (4) angeordnet ist und dazu bestimmt ist, mit dem durch den Ofen zu erhitzenden Inhalt in Kontakt zu kommen,
**dadurch gekennzeichnet, dass**
die metallische Ummantelung (4) zur Kühlung des Ofens beiträgt und mit Kühlrippen (5) versehen ist.

2. Ofen nach dem vorhergehenden Anspruch,
**dadurch gekennzeichnet, dass**
die feuerfeste Ummantelung aus gegossenem feuerfestem Beton ist.

3. Ofen nach dem vorhergehenden Anspruch,
**dadurch gekennzeichnet, dass**
die Umhüllung in wenigstens einer horizontalen Ebene einen monolithischen Charakter hat.

4. Ofen nach Anspruch 2 oder 3,
**dadurch gekennzeichnet, dass**
die Seitenwände des Ofens Teil der feuerfesten Ummantelung sind und einen monolithischen Charakter haben.

5. Ofen nach einem der vorhergehenden Ansprüche,
**dadurch gekennzeichnet, dass**
wenigstens eine Rippe wenigstens teilweise horizontal ist und den Ofen um seine vertikale Achse umgibt.

6. Ofen nach einem der vorhergehenden Ansprüche,
**dadurch gekennzeichnet, dass**
die Rippen der Ausdehnung der metallischen Ummantelung (4) entgegenwirken.

7. Ofen nach einem der vorhergehenden Ansprüche,
**dadurch gekennzeichnet, dass**
eine feuerfeste komprimierbare Platte zwischen der metallischen Ummantelung (4) und der feuerfesten Ummantelung angeordnet ist.

8. Ofen nach einem der vorhergehenden Ansprüche,
**dadurch gekennzeichnet, dass**
er wenigstens einen Tauchbrenner umfasst.

9. Ofen nach einem der vorhergehenden Ansprüche,
**dadurch gekennzeichnet, dass**
seine Bodenfläche kleiner oder gleich 6 m² ist.

10. Verfahren zur Herstellung eines Ofens nach einem der vorhergehenden Ansprüche,
**dadurch gekennzeichnet, dass**
die feuerfeste Ummantelung wenigstens teilweise aus einem feuerfesten Beton zwischen zwei Gussformen gegossen ist, von denen die eine die metallische Ummantelung (4) ist, die mit Kühlrippen (5) versehen ist und als äußere Gussform für den Beton dient.

11. Verfahren nach dem vorhergehenden Anspruch,
**dadurch gekennzeichnet, dass**
es die folgenden Schritte umfasst:
a) Gießen des zur Bildung der Sohle des Ofens gerade benötigten Betons in eine äußere Gussform, dann
b) Aushärtenlassen des Betons der Sohle, dann
c) Anordnen der Sohle in einer inneren Gussform, dann
d) Gießen des Betons zwischen den zwei Gussformen, dann
e) Aushärtenlassen des Betons zwischen den zwei Gussformen, dann
f) Abnehmen der inneren Gussform, dann
g) Wärmebehandeln des Ofens, um ihn betriebsbeständig zu machen.

12. Verwendung des Ofens nach einem der vorhergehenden Ofen-Ansprüche, um ein Glas oder eine Färbungsfritte oder eine Fliesenfritte in geschmolzenem Zustand zu halten, wobei die metallische Ummantelung (4), die mit Kühlrippen (5) versehen ist, zur Kühlung des Ofens beiträgt.

13. Verfahren zur Herstellung eines Glases oder einer Färbungsfritte oder einer Fliesenfritte durch einen Ofen nach einem der vorhergehenden Ofen-Ansprüche, umfassend das Einführen und das Schmelzen verglasbarer Materialien in dem Ofen und dann das Auslassen von in dem Ofen geschmolzenen Materialien, wobei die metallische Ummantelung (4), die mit Kühlrippen (5) versehen ist, zur Kühlung des Ofens beiträgt.

14. Verfahren nach dem vorhergehenden Anspruch,
**dadurch gekennzeichnet, dass**
den verglasbaren Materialien ein Metall zugesetzt wird, wobei das Metall im Laufe des Schmelzvorgangs oxidiert wird.

## Claims

1. A furnace comprising a metal shell (4) and a refractory shell placed inside the metal shell (4) and intended to come into contact with the contents to be heated by the furnace, **characterized in that** the metal shell (4) helps to cool the furnace and is provided with cooling fins (5).

2. The furnace as claimed in the preceding claim, **characterized in that** the refractory shell is made of cast refractory concrete.

3. The furnace as claimed in the preceding claim, **characterized in that** the shell is monolithic in character, at least at a horizontal level.

4. The furnace as claimed in claim 2 or 3, **characterized in that** the side walls of the furnace form part of the refractory shell and are monolithic in character.

5. The furnace as claimed in one of the preceding claims, **characterized in that** at least one fin is at least partly horizontal and goes around the furnace, at its vertical axis.

6. The furnace as claimed in one of the preceding claims, **characterized in that** the fins help to combat the expansion of the metal shell (4).

7. The furnace as claimed in one of the preceding claims, **characterized in that** a compressible refractory sheet is placed between the metal shell (4) and the refractory shell.

8. The shell as claimed in one of the preceding claims, **characterized in that** it includes at least one submerged burner.

9. The furnace as claimed in one of the preceding claims, **characterized in that** its floor area does not exceed 6 m².

10. A method of manufacturing a furnace of one the preceding claims, **characterized in that** the refractory shell is at least partly cast using a refractory concrete between two molding forms, one of which is the metal shell (4) provided with cooling fins (5)and serving as outer molding form for said concrete.

11. The method as claimed in the preceding claim, **characterized in that** if comprises the following steps:
a) just the concrete needed to form the floor of the furnace is cast in an outer molding form; then
b) the concrete of the floor is left to harden; then
c) an inner molding form is placed on the furnace floor; then
d) the concrete is cast between the two molding forms; then
e) the concrete between the two molding forms is left to harden; then
f) the inner molding form is removed; and then
g) the furnace is heat treated so as to make it stable for its operation.

12. Use of the furnace of one of the preceding furnace claims for containing glass or a color frit or a tile frit in the molten state, the metal shell (4) provided with cooling fins (5) helping to the cooling of the furnace.

13. Method of manufacturing a glass or a color frit or a tile frit using a furnace of one of the preceding furnace claims, which comprises the introduction into and the melting in said furnace of batch materials, followed by the extraction of molten materials from said furnace, the metal shell (4) provided with cooling fins (5) helping to the cooling of the furnace.

14. Method according to the preceding claim, **characterized in that** a metal is added to the batch materials, said metal being oxidized during the melting process.
